# EUROPEAN PATENT SPECIFICATION

(11) **EP 1 881 049 B1**
(45) Date of publication and mention of the grant of the patent: **04.11.2020**
(21) Application number: 05737385.4
(22) Date of filing: 22.04.2005
(51) Int. Cl.: C09J 201/00, B32B 5/02, B32B 9/00, C09J 11/00, C09J 9/00, C09J 11/06

(54) **ADHESIVE AGENT FOR THERMALLY INSULATING MATERIAL AND CARBONIZED LAMINATE FOR THERMALLY INSULATING MATERIAL USING THE SAME**
KLEBEMITTEL FÜR WÄRMEDÄMMSTOFF SOWIE DAVON GEBRAUCH MACHENDES CARBONISIERTES LAMINAT FÜR WÄRMEDÄMMSTOFF
AGENT ADHESIF POUR MATERIAU ISOLANT THERMIQUEMENT ET LAMINE CARBONE POUR MATERIAU ISOLANT THERMIQUEMENT UTILISANT CET AGENT ADHESIF

(43) Date of publication of application: 23.01.2008
(73) Proprietor: Kureha Corporation, Tokyo 103-8552 (JP)
(72) Inventor: SHIBUYA, Yukihiro, Iwaki Factory, Kureha Corp., Fukushima 974-8686 (JP); YUSA, Katsuhiro, Iwaki Factory, Kureha Corporation, Fukushima 974-8686 (JP)
(74) Representative: BRP Renaud & Partner mbB Rechtsanwälte Patentanwälte Steuerberater
(86) International application number: PCT/JP2005/008254
(87) International publication number: WO 2006/114896

(56) References cited:
- JP-A- 4 120 184
- JP-A- 6 345 553
- JP-A- 9 314 722
- JP-A- 2002 265 910
- DATABASE WPI Week 199445 Thomson Scientific, London, GB; AN 1994-363833 XP002639911, & JP 6 287527 A (MITSUBISHI KASEI CORP) 11 October 1994 (1994-10-11)
- DATABASE WPI Week 199445 Thomson Scientific, London, GB; AN 1994-363834 XP002639912, & JP 6 287528 A (MITSUBISHI KASEI CORP) 11 October 1994 (1994-10-11)
- DATABASE WPI Week 200272 Thomson Scientific, London, GB; AN 2002-671645 XP002639913, & JP 2002 265910 A (KUROSAKI REFRACTORIES CO) 18 September 2002 (2002-09-18)
- DATABASE WPI Week 199222 Thomson Scientific, London, GB; AN 1992-180963 XP002639914, & JP 4 120184 A (DAINIPPON INK & CHEM KK) 21 April 1992 (1992-04-21)
- DATABASE WPI Week 199217 Thomson Scientific, London, GB; AN 1992-138911 XP002639915, & JP 4 083779 A (TOKAI CARBON KK) 17 March 1992 (1992-03-17)

## Description

### Technical Field

The present invention relates to an adhesive used in a laminated body for a thermal insulator having a carbon molded body in a layer structure and a method for producing a carbonized-laminated body using the adhesive. The present invention more specifically relates to an adhesive suitable for a high temperature furnace.

### Background of the Invention

A carbon fiber-molded thermal insulator is widely used as the thermal insulator for a high temperature furnace such as a vacuum furnace and an atmosphere furnace which is used for performing a heat treatment on metals, sintering fine ceramics, pulling various kinds of crystals, and the like. As one form of the carbon fiber-molded thermal insulator, the thermal insulator is laminated with a graphite sheet on the surface of carbon fiber felt with a carbonaceous adhesive for the purposes of the improvement in the heat insulating property, the prevention of carbon fiber powders from flying apart, the prevention of the gas generated by sintering metals from permeating into the thermal insulator, and the like. As such an adhesive used to produce the carbon fiber-molded thermal insulator formed by laminating a surface-covering material on the surface of the carbon fiber felt, Japanese Examined Utility Model Registration Application Publication No. Sho 58-29129 proposes an adhesive using a solution in which a resol-type phenolic resin is diluted using ethanol. Meanwhile, Japanese Unexamined Patent Application Publication No. Hei 6-287527 proposes an adhesive including a resol-type phenolic resin, methanol and carbon fiber powders. The general technical background of the invention also includes JP 4083779 A of March 17, 1992 and JP6287527 A of October 11, 1994.

However, there has been a problem that the use of the conventional adhesives causes the insufficient adhesion between the carbon fiber felt layer of the main bodies of the carbon fiber-molded thermal insulators and the surface-covering layers thereof. As a result, the surface-covering layer is swollen and peeled-off in the repeating processes of increasing and decreasing temperature.

An object of the present invention is to provide: an adhesive for a thermal insulator which does not allow the occurrence of the peeling-off and swelling of the layer in the repeating processes of increasing and decreasing temperature in a thermal insulator formed of a laminated matter having a carbon molded body in the layer structure thereof; and a laminated body using the adhesive. Another object of the present invention is to provide a carbonized-laminated body which does not allow the occurrence of the peeling-off and swelling of the layer in the repeating processes of increasing and decreasing temperature. Still another object of the present invention is to provide, as a usage of the carbonized-laminated body, a laminated body for a thermal insulator which hardly allows the occurrence of the peeling-off and swelling of the layer in the repeating processes of increasing and decreasing temperature.

### Disclosure of the Invention

It has so far been considered that, as a solvent used in an adhesive, any solvent can be used as long as the solvent dissolves a raw material for carbonization which forms the matrix of the adhesive. On the contrary, the present inventors have discovered that the solvent not only dissolves the raw material for carbonization, but also the kind of the solvent influences the properties of a thermal insulator to be obtained. Furthermore, the present inventors have discovered that the problem of the present invention is solved by use of a heterocyclic compound as the solvent. Then, the present invention has been completed.

Specifically, a first aspect of the present invention is to provide an adhesive for a thermal insulator, comprising:
(1) 100 parts by mass (pbm) of a raw material for carbonization with a carbonization ratio of 40% or more when carbonized in a non-oxidation atmosphere at 800°C, the raw material being selected from a polyurethane, a polyisocyanate, a polyimide, a phenolic resin, a furan resin, an urea resin, a polyester resin, an epoxy resin, pitch and coal tar;
(2) 5-150 pbm of a heterocyclic compound which has oxygen as an element constructing the ring thereof and which dissolves the raw material for carbonization; and
(3) 5-80 pbm of any of short carbon fibers and short fibers which are carbonizable and insoluble in the heterocyclic compound wherein any of the short carbon fibers and the short fibers which are carbonizable and insoluble in the heterocyclic compound have an average fiber length of 0.02-2 mm and satisfy 200≥L/D≥5.

A second aspect of the present invention is to provide the adhesive for a thermal insulator according to the first aspect of the present invention, wherein the heterocyclic compound is a compound having a furyl group.

A third aspect of the present invention is to provide the adhesive for a thermal insulator according to the second aspect of the present invention, wherein the compound having a furyl group is 2-furylmethanol and/or 2-furylaldehyde.

A fourth aspect of the present invention is to provide a method for producing a carbonized-laminated body comprising the following steps:
- calcining a carbon fiber or a graphite material, each of which is optionally impregnated with a carbonizable resin, to obtain a carbonized-molded body, the carbonized-molded body being a carbon fiber felt, carbon fiber cloth, carbon fiber-containing paper or a graphite sheet and having a carbonization ratio of ≥ 40% when carbonized in a non-oxidation atmosphere at 800°C,
- spreading an adhesive on at least one surface of a carbonized-molded body to obtain a coating layer of the adhesive,
- laminating a different molded body on the coating layer to obtain a laminated body, and
- carbonizing the laminated body,
   characterized in that the adhesive is the adhesive for a thermal insulator according to any one of the first to third aspects of the present invention.

A fifth aspect of the present invention is to provide the method according to the fourth aspect of the present invention, wherein the carbonized-molded body on which the adhesive is spread has a dense inner structure, and wherein the heterocyclic compound of the adhesive swells the matrix of the carbonized-molded body.

A sixth aspect of the present invention is to provide the method according to the fifth aspect of the present invention, wherein the carbonized-molded body on which the adhesive is spread is a graphite sheet.

A seventh aspect of the present invention is to provide the method according to the fourth aspect of the present invention, wherein the carbonized-molded body on which the adhesive is spread has a porous inner structure.

An eighth aspect of the present invention is to provide the method according to any one of the fourth to seventh aspects of the present invention, wherein the carbonized-laminated body is a thermal insulator.

### Detailed Description of the Preferred Embodiments

Embodiments of the present invention will be described below.

An adhesive for a thermal insulator of the present invention comprises: (1) 100 parts by mass (pbm) of a raw material for carbonization with a carbonization ratio of 40% or more when carbonized in a non-oxidation atmosphere at 800°C, the raw material being selected from a polyurethane, a polyisocyanate, a polyimide, a phenolic resin, a furan resin, an urea resin, a polyester resin, an epoxy resin, pitch and coal tar; (2) 5-150 pbm of a heterocyclic compound which has oxygen as an element constructing the ring thereof and which dissolves the raw material for carbonization; and (3) 5-80 pbm of any of short carbon fibers and short fibers which are carbonizable and insoluble in the heterocyclic compound wherein any of the short carbon fibers and the short fibers which are carbonizable and insoluble in the heterocyclic compound have an average fiber length of 0.02-2 mm and satisfy 200≥L/D≥5. The adhesive for a thermal insulator will be described below.

The raw material for carbonization with a carbonization ratio of 40% or more, which constitutes the adhesive for a thermal insulator (in some cases, referred to as an adhesive) of the present invention is not particularly limited as long as the material is carbonized in a non-oxidation atmosphere at 800°C to have a carbonization ratio of 40% or more. A raw material for carbonization with a carbonization ratio of 50% or more is preferably used, and particularly preferably 60% or more. The raw material for carbonization is selected from a polyurethane, a polyisocyanate, a polyimide, a phenolic resin, a furan resin, a urea resin, a polyester resin, an epoxy resin, pitch and coal tar. Of these, a resin having a high carbonization yield is preferably used, and particularly preferably a phenolic resin is used. As a phenolic resin, any of a resol-type phenolic resin and a novolac-type phenolic resin may be used. Both types may also be used in combination.

The heterocyclic compound which is one of the components constituting the adhesive for a thermal insulator of the present invention must dissolve the raw material for carbonization. The dissolution should be carried out at less than the boiling point of the heterocyclic compound at least, and further preferably at normal temperature. Any heterocyclic compound which consists of three-, four-, five-, six-membered ring, or the like is used. The heterocyclic compound has an oxygen as an element constructing the ring thereof. Specifically, 2-furylmethanol and 2-furylaldehyde are preferably used.

For practical purposes, a heterocyclic compound having a high solubility is selected. Employed is 5 to 150 parts by mass of a heterocyclic compound, preferably 10 to 130 parts by mass, and further preferably 15 to 100 parts by mass, relative to 100 parts by mass of a raw material for carbonization.

The adhesive of the present invention has a low adhesion strength, if the adhesive includes only the raw material for carbonization and the heterocyclic compound which is a solvent therefor. For this reason, the short carbon fibers or the short fibers which are carbonizable and insoluble in the heterocyclic compound are used. When such short fibers are not contained, a "lump" (a block remained unresolved in the form of powders) tends to be formed. When the short fibers are contained, uniform dispersion can be carried out so that the "lump" cannot be formed. Particularly, the short carbon fibers enhance an anchoring effect with a binding surface after binding. In the case where an object to be bound has such hardness as a graphite sheet, carbon fiber cloth, carbon fiber-containing paper, and the like, the short carbon fibers are preferably contained because the heat shrinkage of the adhesive during the carbonization can be inhibited. In the present invention, a term "carbonization" is used to mean to include a calcination treatment at 800 °C or more to less than 2000°C and a graphitization treatment at 2000°C to 3000°C inclusive. As a fiber which is carbonizable and insoluble in the heterocyclic compound, a polyacrylonitrile fiber is preferable used.

As the short carbon fibers or the short fibers which are carbonizable and insoluble in the heterocyclic compound, used are the ones which have an average fiber length of 0.02 mm to 2 mm and 200≥L/D≥5, preferably 0.05 mm to 1.5 mm and 150≥L/D≥6, and particularly preferably 0.1 mm to 1.3 mm and 130≥L/D≥10. When the value of the average fiber length is excessively large, it becomes difficult to spread the adhesive on a binding surface. Meanwhile, when the value of the average fiber length is excessively small, the anchoring effect is reduced, and it becomes difficult to inhibit the occurrence of lumps. When L/D is excessively large, it becomes difficult to homogeneously disperse the short fibers. Meanwhile, when L/D is excessively small, the reinforcing effect of the short fibers on the adhesive layer cannot be obtained. Five to eighty parts by mass of such short fibers, and preferably 10 to 50 parts by mass, are used relative to 100 parts of the raw material for carbonization.

Of these, preferably used are the short carbon fibers having the above-described average fiber length and L/D.

The adhesive of the present invention may additionally contain graphite powders as necessary. The graphite powders have effects of inhibiting the heat shrinkage and reducing the possibility of peeling-off. Therefore, when an object to be bound is carbonized, it is desirable to contain the graphite powders. Preferably 10 to 80 parts by mass of the graphite powders, and further preferably 20 to 60 parts by mass, are used relative to 100 parts by mass of the raw material for carbonization, because the excessively large amount of the graphite powders deteriorates the adhesion properties.

The adhesive of the present invention may use a diluent which dissolves the heterocyclic compound. For example, when the adhesive is coated at normal temperature using a blush, the viscosity is preferably adjusted using a diluent to homogeneously spread the adhesive on the binding surface. Examples of such a diluent are alcohols, ketones and water. Methanol, ethanol, propyl alcohol, isopropyl alcohol, and the like, are preferably used. The amount of the diluent is not limited as long as the diluent forms a transparent liquid phase in cooperation with the heterocyclic compound by that amount. The diluent can be used suitably in controlling the adhesive for a thermal insulator of the present invention so that the adhesive can have a viscosity suitable for an operation in which the adhesive is coated on the surface of the object to be bound.

The adhesive for thermal insulator of the present invention can preferably be used within a viscosity range of 5 mPa·s to 20 mPa·s, further preferably 10 mPa·s to 15 mPa·s (20°C), by adding each component of the adhesive irrespective of a particular adding order and by homogeneously mixing or dispersing the adhesive with a stirrer and the like. By means of the adhesive, a before carbonized-laminated body is formed by spreading (coating) the adhesive with a blush, a sprayer, or the like, on a surface of a carbonized-molded body, and by binding and laminating another carbonized-molded body thereon.

The before carbonized-laminated body formed by spreading an adhesive for a thermal insulator on at least one surface of a carbonized-molded body and by laminating a different molded body thereon will be described.

As the adhesive used in the laminated body, the above-described adhesive for a thermal insulator is used. The carbonized-molded body constituting the before carbonized-laminated body is used not to narrowly mean a molded body including carbon only, but to inclusively mean: a carbon molded body with a carbonization ratio of 40% or more, preferably 50% or more and most preferably 60% or more, in a non-oxidation atmosphere at 800°C; a molded body (in some cases, referred to as a graphite molded body) with a carbonization ratio of preferably 40% or more, further preferably 50% or more, and most preferably 60% or more, after carbonization in a non-oxidation atmosphere at 2000°C; and a molded body (carbonizable molded body) which can achieve the above carbonization ratio. Specific examples of carbonized-molded body constituting the laminated body can include a, carbon fiber cloth, carbon fiber-containing paper, graphite sheet, and the like. These materials are produced by calcining a carbon fiber or a graphite material which has been impregnated, as a matrix, with a carbonizable resin which can satisfy the above carbonization ratio such as polyurethane, polyisocyanate, polyimide, a phenolic resin, a furan resin, a urea resin, a polyester resin and an epoxy resin, or by calcining a carbon fiber or a graphite material which has not been impregnated therewith these.

The laminated body is formed by spreading (coating) the adhesive on at least one surface of the carbonized-molded body, and by laminating a different molded body on the surface on which the adhesive is spread. The different molded body constituting the laminated body is not particularly limited if the different molded body is carbonized when the laminated body is carbonized, and preferably is the carbonized-molded body.

The adhesive is spread on at least one surface of the carbonized-molded body. The carbonized-molded body includes: a molded body having a dense inner structure in terms of a form, more specifically, a molded body, the inside of which is filled without gaps; and a molded body having a porous inner structure in terms of a form, more specifically, a molded body, the inside of which is filled while gaps are left. Of these, a graphite sheet is used as the molded body having a dense inner structure on which the adhesive is spread. As the molded body having a porous inner structure, used is at least one kind of the molded body selected from carbon fiber felt, carbon fiber-containing paper and carbon fiber cloth.

The spread amount of the adhesive varies in response to whether the inner structure of the molded body on which the adhesive is spread is dense or porous, but is preferably 100 g to 1500 g, further preferably 300 g to 1000 g, and most preferably 400 g to 800 g, on 1 m² of the molded body.

The heterocyclic compound constituting the adhesive must swell the matrix of the carbonized-molded body at less than the boiling point of the heterocyclic compound, and preferably at normal temperature. When the carbonized-molded body having a dense inner structure on which the adhesive is spread is for example a graphite sheet, the graphite sheet itself is a matrix, and the graphite sheet itself is swollen. As a result, the inside of the graphite sheet is impregnated with the raw material for carbonization which is one component of the adhesive. With respect to the matrix, when the molded body is made of fibers and a different carbonized matter, the different carbonized matter is the matrix. When the molded body contains only the matrix but not a matter corresponding to the fiber as in the case of the graphite sheet, the graphite sheet itself is the matrix. As such a heterocyclic compound, 2-furylmethanol and/or 2-furyl alcohol is preferable. Meanwhile, when a carbonized-molded body having a porous inner structure on which the adhesive is spread, and the inside of which is filled while gaps are left, is for example carbon fiber felt, the raw material for carbonization which is one component of the adhesive passes through the gaps in the inside of the molded body, and is entangled with the carbon fibers, thereby contributing to the improvement in the adhesion strength. In such a case, the heterocyclic compound does not need to swell the matrix of the carbon fiber felt. Here, a term "swelling" means that the existence of a swollen section is recognized by visual observation when the matrix material of the molded body having a size as large as about several centimeters on which the adhesive is spread is immersed in the heterocyclic compound, and then left as it is at room temperature for 5 days.

The before carbonized-laminated body can be generally obtained by: coating, with the adhesive for a thermal insulator of the present invention using a blush or a spraying means, one or both surfaces of the carbonized-molded body in which carbon fiber felt or the like is impregnated with a commercially available impregnating liquid, and in which the resin thus impregnated is hardened; laminating a different molded body on the surface of which the adhesive is coated at about 150°C without pressing; and then compressing and molding the resultant for several minutes to 3 hours to harden the resin. In the adhesive to be used, all the characteristics and natures described in the present invention related to the adhesive are employed. As a specific example, Example 1 gives an example of: a before carbonized-laminated body in which the resin is hardened, and which is formed by compressing and molding, at 150°C at a pressure of 0.015 MPa for 140 minutes, carbon fiber felt laminated with 6 sheets, which is formed by coating one surface of a graphite sheet (available from TOYO TANSO CO., LTD., "PERMA-FOIL") with the adhesive for a thermal insulator of the present invention using a blush, and by impregnating the graphite sheet with a commercially available phenolic impregnating liquid (available from SHOWA HIGHPOLYMER CO., LTD., "SHONOL BRS-3896"); and a carbonization treatment (graphitization treatment) of the laminated body.

A carbonized-laminated body can be obtained by further performing the carbonization treatment (graphitization treatment) on the before carbonized-laminated body in an inert gas atmosphere such as nitrogen or argon gas, or in vacuum (vacuum degree of 5 kPa or less), preferably at 1800°C to 2600°C, further preferably at 1900°C to 2500°C, and most preferably at 2000°C to 2400°C, preferably for 2 hours or less. The carbonized-laminated body thus obtained can suitably be used as a thermal insulator for a vacuum furnace, because includes the carbon fiber felt layer thereof has a high bulk density, and because the peeling-off and swelling of the layers rarely occur in the heat cycle repeating processes of increasing and decreasing temperature up to 2000°C after the carbonized-laminated body is mounted in a vacuum furnace so that the graphite sheet can be set on the high temperature side.

Note that, a carbonized-laminated body firmly bonded with a newly laminated carbonized-molded body can be obtained by: suitably laminating the new carbonized-molded body on the before carbonized-laminated body and the carbonized-laminated body using the adhesive for a thermal insulator of the present invention; and then performing the carbonization treatment thereon to carbonize the adhesive.

### Examples

The present invention will more specifically be described below with reference to examples. However, the present invention is not limited to the following examples. The evaluation of the examples is as shown below.

### Average fiber length

5 ml of liquid paraffin is measured and put in a 30 ml Erlenmeyer flask with a 10 ml dropper. A sample is taken from short carbon fibers to be used randomly with a microspatula, and added in the Erlenmeyer flask. Thereafter, the sample is dispersed by mixing in the liquid paraffin. 300 µl of the dispersion liquid is taken therefrom with a pipettor, and attached on a first slide glass. Then, a second slide glass is laid thereon to be compressed. The slide glasses are mounted to an image analyzing apparatus (used is LUZEX IIIU available from Nireco Corporation). The average fiber length (average in volume) is determined with measured values of 1000 to 1300 single fibers.

### Heat cycle test of increasing and decreasing temperature

A sample was mounted in a vacuum furnace. The atmosphere of the furnace was replaced with nitrogen. Subsequently, a vacuum degree was made 5 kPa or less while a small amount of nitrogen was introduced thereto. Under such conditions, the temperature was increased from normal temperature to 2000°C at a temperature increase rate of 41 °C/hr. The temperature was held at 2000°C for 1 hour. Then, the power supply of the heater was turned off, and naturally cooled to 300°C. After the temperature was cooled to 300°C, the sample was taken out of the furnace, and thereafter naturally cooled. This cycle was about 72 hours/cycle. This cycle is repeated to evaluate the adhesion properties of the adhesive as the number of the repetition performed until swelling and peeling-off are recognized in the sample.

### Example 1

100 parts by mass of pitch-based carbon fiber felt (available from KUREHA CORPORATION, "KRECA FELT F-110", density: 0.06 g/cm³, apparent thickness: 16 mm) was impregnated with 44 parts by mass of a phenolic resin-impregnating liquid (available from SHOWA HIGHPOLYMER CO., LTD., "SHONOL BRS-3896") to be laminated with 6 flat plate-shaped layers.

On the other hand, an adhesive was prepared by homogeneously mixing and dispersing 15 parts by mass of the phenolic resin-impregnating liquid, 25 parts by mass of a powdered phenolic resin (available from Cashew Co., Ltd., "Cashew resin No. 05"), 10 parts by mass of short carbon fibers (available from KUREHA CORPORATION, KRECA CHOP M-107T, average fiber length 0.4 mm, a value of L/D is approximately equal to 22), 10 parts by mass of 2-furylmethanol (available from JUNSEI CHEMICAL CO.,LTD., purity grade 1), and 40 parts by mass of an ethanol-mixed solution (available from Japan Alcohol Trading CO., LTD., "SOLMIX H-23") .

Then, the adhesive was coated on a binding surface of a graphite sheet (available from TOYO TANSO CO., LTD., "PERMA-FOIL") 0.38 mm thick at a rate of 450 g/m² using a blush. This graphite sheet was laminated on the laminated carbon fiber felt without pressing. Thereafter, the carbon fiber felt was compressed and molded at 150°C at a pressure of 0.015 MPa for 140 minutes to harden the resin. Furthermore, the graphitization treatment was performed, in vacuum at 2000°C for 1 hour, on the carbon fiber felt on the one surface of which the graphite sheet was laminated, and in which the resin was hardened. Thereby, obtained was a flat plate-shaped thermal insulator which included the carbon fiber felt layer having a bulk density of 0.16 g/cm³. The flat plate-shaped thermal insulator was mounted in a vacuum furnace, so that the graphite sheet was set on the high temperature side. Subsequently, a heat cycle of increasing temperature to 2000°C and decreasing temperature was repeated 44 times. As a result, the peeling-off and swelling of the layer were not recognized. Consequently, the flat plate-shaped thermal insulator was capable of being used as a thermal insulator for a vacuum furnace.

### Comparative example 1

A flat plate-shaped thermal insulator which included the carbon fiber felt layer having a bulk density of 0.16 g/cm³, and which had the graphite sheet on one surface thereof was obtained in the same manner as that of Example 1 except that an adhesive containing methanol was used instead of 2-furylmethanol in the adhesive of Example 1. The flat plate-shaped thermal insulator was mounted in a vacuum furnace, so that the graphite sheet was set on the high temperature side. Subsequently, the heat cycle of increasing temperature to 2000°C and decreasing temperature was repeated 10 times. At this time, a swelling section was recognized in the graphite sheet, and the graphite sheet was partially peeled off.

### Example 2

A flat plate-shaped thermal insulator which included a carbon fiber felt layer having a bulk density of 0.16 g/cm³, and which had a carbon fiber cloth on one surface thereof was obtained in the same manner as that of Example 1 except that the carbon fiber cloth (available from KUREHA CORPORATION, "KRECA CLOTH P-200") was used instead of the graphite sheet 0.38 mm thick of Example 1, and except that the adhesive was coated on the binding surface of the carbon fiber cloth at a rate of 700 g/m² using a blush. The flat plate-shaped thermal insulator was mounted in a vacuum furnace, so that the carbon fiber cloth was set on the high temperature side. Subsequently, the heat cycle of increasing temperature to 2000°C and decreasing temperature was repeated 44 times. As a result, the peeling-off and swelling of the layer were not recognized. Consequently, the flat plate-shaped thermal insulator was capable of being used as a thermal insulator for a vacuum furnace.

### Example 3

The adhesive same as that of Example 1 was coated on one surface of the carbon fiber cloth identical to that used in Example 2 at a rate of 700 g/m² using a blush. This was pasted to the surface, on the carbon fiber cloth side, of the flat plate-shaped thermal insulator of Example 2 which had the carbon fiber cloth on the one surface thereof, and thereafter was compressed and molded at 150°C at a pressure of 0.015 MPa for 140 minutes to harden the resin. Furthermore, the graphitization treatment was performed thereon in vacuum at 2000°C for 1 hour. Thereby, obtained was a flat plate-shaped thermal insulator which had a three-layered structure of carbon fiber felt/carbon fiber cloth/carbon fiber cloth, and which included the carbon fiber felt layer having a bulk density of 0.16 g/cm³. The flat plate-shaped thermal insulator was mounted in a vacuum furnace, so that the carbon fiber cloth was set on the high temperature side. Subsequently, the heat cycle of increasing temperature to 2000°C and decreasing temperature was repeated 44 times. As a result, the peeling-off and swelling of the layer were not recognized. Consequently, the flat plate-shaped thermal insulator was capable of being used as a thermal insulator for a vacuum furnace.

### Example 4

A flat plate-shaped thermal insulator which included the carbon fiber felt layer having a bulk density of 0.16 g/cm³, and which had carbon fiber paper on one surface thereof was obtained in the same manner as that of Example 1 except that the carbon fiber paper (available from KUREHA CORPORATION, "KRECA PAPER E-204") was used instead of the graphite sheet of Example 1, and except that the adhesive same as that of Example 1 was coated on the binding surface of the carbon fiber paper at a rate of 500 g/m² using a blush. The flat plate-shaped thermal insulator was mounted in a vacuum furnace, so that the carbon fiber paper was set on the high temperature side. Subsequently, the heat cycle of increasing temperature to 2000°C and decreasing temperature was repeated 44 times. As a result, the peeling-off and swelling of the layer were not recognized. Consequently, the flat plate-shaped thermal insulator was capable of being used as a thermal insulator for a vacuum furnace.

### Example 5

This example was carried out in the same manner as that of Example 1 except that a phenolic resin-impregnating liquid (available from Gun Ei Chemical Industry Co., Ltd., "RESITOP PL-6107") was used instead of "SHONOL BRS-3896" of Example 1. As a result, the peeling-off and swelling of the layer were not recognized after the repetition of 44 times. Consequently, the flat plate-shaped thermal insulator was capable of being used as a thermal insulator for a vacuum furnace.

### Example 6

This example was carried out in the same manner as that of Example 1 except that: an adhesive was prepared by using 50 parts by mass of the phenolic resin-impregnating liquid, 25 parts by mass of the powdered phenolic resin, 9 parts by mass of the short carbon fibers, and 9 parts by mass of the 2-furylmethanol respectively instead of 15 parts by mass, 25 parts by mass, 10 parts by mass, and 10 parts by mass thereof in the adhesive used in Example 1 as well as by using 7 parts by mass of water instead of 40 parts by mass of the ethanol-mixed solution; and the graphitization treatment was performed in a nitrogen gas atmosphere at 2000°C. As a result, the peeling-off and swelling of the layer were not recognized after the repetition of 44 times. Consequently, the flat plate-shaped thermal insulator was capable of being used as a thermal insulator for a vacuum furnace.

### Example 7

The adhesive used in Example 6 was coated on one surface of the graphite sheet identical to that used in Example 1 at a rate of 450 g/m² using a blush. This was pasted to the surface on the graphite sheet side constituting the one surface of the two-layered structure obtained in Example 6. Thereby, obtained was a three-layered structure, and then the test was carried out in the same manner as that of Example 3. As a result, the peeling-off and swelling of the layer were not recognized after the repetition of 44 times. Consequently, the flat plate-shaped thermal insulator was capable of being used as a thermal insulator for a vacuum furnace.

### Example 8

This example was carried out in the same manner as that of Example 6 except that RESITOP PL-6107 available from Gun Ei Chemical Industry Co., Ltd. was used instead of "SHONOL BRS-3896" of Example 6. As a result, the peeling-off and swelling of the layer were not recognized after the repetition of 44 times. Consequently, the flat plate-shaped thermal insulator was capable of being used as a thermal insulator for a vacuum furnace.

### Example 9

After 6 flat plate-shaped layers were laminated in the same manner as that of Example 1, the carbon fiber felt was compressed and molded at 150°C at a pressure of 0.015 MPa for 140 minutes to harden the resin. Furthermore, the graphitization treatment was performed on the hardened carbon fiber felt in vacuum at 2000°C for 1 hour. Thereby, a flat plate-shaped carbon fiber felt having a bulk density of 0.16 g/cm³ was obtained.

Moreover, an adhesive was prepared by homogeneously mixing and dispersing 60 parts by mass of a furan resin (available from Hitachi Chemical Co., Ltd., "HITA FURAN VF-303"), 16 parts by mass of "KRECA CHOP M-107T" of Example 1, 16 parts by mass of graphite powders (available from Nippon Graphite Industry, Co., Ltd., "HAG-15"), and 8 parts by mass of 2-furylmethanol of Example 1.

Next, the adhesive used in Example 8 was coated on one surface of "PERMA-FOIL" same as that used in Example 1 at a rate of 450 g/m² using a spatula. This graphite sheet was pasted to the flat plate-shaped carbon fiber felt, and compressed and molded on at 150°C at a pressure of 0.015 MPa for 140 minutes to harden the resin. Furthermore, a flat plate-shaped thermal insulator which included the carbon fiber felt layer having a bulk density of 0.16 g/cm³ was obtained by further graphitizing the laminated structure in vacuum at 2000°C for 1 hour. The heat cycle was carried out on this in the same manner as that of Example 1. As a result, the peeling-off and swelling of the layer were not recognized after the repetition of 44 times. Consequently, the flat plate-shaped thermal insulator was capable of being used as a thermal insulator for a vacuum furnace.

### Example 10

This example was carried out in the same manner as that of Example 9 except that "KRECA CLOTH P-200" of Example 2 was used instead of "PERMA-FOIL" of Example 9, and except that the adhesive was coated on one surface of this carbon fiber cloth at a rate of 700 g/m² using a spatula. As a result, the peeling-off and swelling of the layer were not recognized. Consequently, the flat plate-shaped thermal insulator was capable of being used as a thermal insulator for a vacuum furnace.

### Example 11

This example was carried out in the same manner as that of Example 9 except that "KRECA PAPER E-204" of Example 4 was used instead of "PERMA-FOIL" of Example 9, and except that the adhesive was coated on one surface of this carbon fiber paper at a rate of 500 g/m² using a spatula. As a result, the peeling-off and swelling of the layer were not recognized after the repetition of 44 times. Consequently, the flat plate-shaped thermal insulator was capable of being used as a thermal insulator for a vacuum furnace.

### Industrial Applicability

According to the present invention, a carbonized-laminated body which is firmly bound by using a particular adhesive containing a heterocyclic compound as an adhesive for a thermal insulator is obtained. The laminated body used as a thermal insulator can be provided as a carbonized-laminated body used for a thermal insulator which rarely allows the occurrence of the peeling-off and swelling of the layer in the repeating processes of increasing and decreasing temperature. from Gun Ei Chemical Industry Co., Ltd. was used instead of "SHONOL BRS-3896" of Example 6. As a result, the peeling-off and swelling of the layer were not recognized after the repetition of 44 times. Consequently, the flat plate-shaped thermal insulator was capable of being used as a thermal insulator for a vacuum furnace.

### Example 9

After 6 flat plate-shaped layers were laminated in the same manner as that of Example 1, the carbon fiber felt was compressed and molded at 150°C at a pressure of 0.015 MPa for 140 minutes to harden the resin. Furthermore, the graphitization treatment was performed on the hardened carbon fiber felt in vacuum at 2000°C for 1 hour. Thereby, a flat plate-shaped carbon fiber felt having a bulk density of 0.16 g/cm³ was obtained.

Moreover, an adhesive was prepared by homogeneously mixing and dispersing 60 parts by mass of a furan resin (available from Hitachi Chemical Co., Ltd., "HITA FURAN VF-303"), 16 parts by mass of "KRECA CHOP M-107T" of Example 1, 16 parts by mass of graphite powders (available from Nippon Graphite Industry, Co., Ltd., "HAG-15"), and 8 parts by mass of 2-furylmethanol of Example 1.

Next, the adhesive used in Example 8 was coated on one surface of "PERMA-FOIL" same as that used in Example 1 at a rate of 450 g/m² using a spatula. This graphite sheet was pasted to the flat plate-shaped carbon fiber felt, and compressed and molded on at 150°C at a pressure of 0.015 MPa for 140 minutes to harden the resin. Furthermore, a flat plate-shaped thermal insulator which included the carbon fiber felt layer having a bulk density of 0.16 g/cm³ was obtained by further graphitizing the laminated structure in vacuum at 2000°C for 1 hour. The heat cycle was carried out on this in the same manner as that of Example 1. As a result, the peeling-off and swelling of the layer were not recognized after the repetition of 44 times. Consequently, the flat plate-shaped thermal insulator was capable of being used as a thermal insulator for a vacuum furnace.

### Example 10

This example was carried out in the same manner as that of Example 9 except that "KRECA CLOTH P-200" of Example 2 was used instead of "PERMA-FOIL" of Example 9, and except that the adhesive was coated on one surface of this carbon fiber cloth at a rate of 700 g/m² using a spatula. As a result, the peeling-off and swelling of the layer were not recognized. Consequently, the flat plate-shaped thermal insulator was capable of being used as a thermal insulator for a vacuum furnace.

### Example 11

This example was carried out in the same manner as that of Example 9 except that "KRECA PAPER E-204" of Example 4 was used instead of "PERMA-FOIL" of Example 9, and except that the adhesive was coated on one surface of this carbon fiber paper at a rate of 500 g/m² using a spatula. As a result, the peeling-off and swelling of the layer were not recognized after the repetition of 44 times. Consequently, the flat plate-shaped thermal insulator was capable of being used as a thermal insulator for a vacuum furnace.

### Industrial Applicability

According to the present invention, a carbonized-laminated body which is firmly bound by using a particular adhesive containing a heterocyclic compound as an adhesive for a thermal insulator is obtained. The laminated body used as a thermal insulator can be provided as a carbonized-laminated body used for a thermal insulator which rarely allows the occurrence of the peeling-off and swelling of the layer in the repeating processes of increasing and decreasing temperature.

## Claims

1. An adhesive for a thermal insulator, wherein the adhesive comprises:
(1) 100 parts by mass (pbm) of a raw material for carbonization with a carbonization ratio of ≥ 40% when carbonized in a non-oxidation atmosphere at 800°C, the raw material being selected from a polyurethane, a polyisocyanate, a polyimide, a phenolic resin, a furan resin, an urea resin, a polyester resin, an epoxy resin, pitch and coal tar, the adhesive further comprises:
(2) 5-150 pbm of a heterocyclic compound which has oxygen as an element constructing the ring thereof and which dissolves the raw material for carbonization; and
(3) 5-80 pbm of any of short carbon fibers and short fibers which are carbonizable and insoluble in the heterocyclic compound wherein any of the short carbon fibers and the short fibers which are carbonizable and insoluble in the heterocyclic compound are **characterized in that** they have an average fiber length of 0.02-2 mm and satisfy 200≥L/D≥5.

2. The adhesive for a thermal insulator of claim 1, wherein the heterocyclic compound is a compound having a furyl group.

3. The adhesive for a thermal insulator of claim 2, wherein the compound having a furyl group is 2-furylmethanol and/or 2-furylaldehyde.

4. A method for producing a carbonized-laminated body comprising the following steps:
- calcining a carbon fiber or a graphite material, each of which is optionally impregnated with a carbonizable resin, to obtain a carbonized-molded body, the carbonized-molded body being a carbon fiber felt, carbon fiber cloth, carbon fiber-containing paper or a graphite sheet and having a carbonization ratio of ≥ 40% when carbonized in a non-oxidation atmosphere at 800°C,
- spreading an adhesive on at least one surface of a carbonized-molded body to obtain a coating layer of the adhesive,
- laminating a different molded body on the coating layer to obtain a laminated body, and
- carbonizing the laminated body,
**characterized in that** the adhesive is the adhesive for a thermal insulator of any of claims 1-3.

5. The method of claim 4, wherein the carbonized-molded body on which the adhesive is spread has a dense inner structure, and wherein the heterocyclic compound of the adhesive swells the matrix of the carbonized-molded body.

6. The method of claim 5, wherein the carbonized-molded body on which the adhesive is spread is a graphite sheet.

7. The method of claim 4, wherein the carbonized-molded body on which the adhesive is spread has a porous inner structure.

8. The method of any one of claims 4 to 7, wherein the carbonized-laminated body is a thermal insulator.

## Patentansprüche

1. Klebemittel für einen Wärmedämmstoff, wobei das Klebemittel umfasst:
(1) 100 Massenteile (pbm) eines Rohmaterials zur Karbonisierung mit einem Karbonisierungsverhältnis von ≥ 40 % bei Karbonisierung in einer nicht oxidierenden Atmosphäre bei 800 °C, wobei das Rohmaterial ausgewählt ist aus einem Polyurethan, einem Polyisocyanat, einem Polyimid, einem Phenolharz, einem Furanharz, einem Harnstoffharz, einem Polyesterharz, einem Epoxidharz, Pech und Kohlenteer, wobei das Klebemittel ferner umfasst:
(2) 5-150 pbm einer heterocyclischen Verbindung, die Sauerstoff als Element aufweist, das den Ring davon bildet, und das Rohmaterial für die Karbonisierung löst; und
(3) 5 bis 80 pbm von beliebigen von kurzen Kohlenstofffasern und kurzen Fasern, die in der heterocyclischen Verbindung karbonisierbar und unlöslich sind, wobei eine der kurzen Kohlenstofffasern und die kurzen Fasern, die in der heterocyclischen Verbindung karbonisierbar und unlöslich sind, **dadurch gekennzeichnet sind, dass** sie eine durchschnittliche Faserlänge von 0,02-2 mm aufweisen und 200 ≥ L / D ≥ 5 erfüllen.

2. Klebemittel für einen Wärmedämmstoff nach Anspruch 1, wobei die heterocyclische Verbindung eine Verbindung mit einer Furylgruppe ist.

3. Klebemittel für einen Wärmedämmstoff nach Anspruch 2, wobei die Verbindung mit einer Furylgruppe 2-Furylmethanol und/oder 2-Furylaldehyd ist.

4. Verfahren zur Herstellung eines karbonisiert-laminierten Körpers, umfassend die folgenden Schritte:
- Kalzinieren einer Kohlefaser oder eines Graphitmaterials, von denen jedes gegebenenfalls mit einem karbonisierbaren Harz imprägniert ist, um einen karbonisiert-geformten Körper zu erhalten, wobei der karbonisiert-geformte Körper ein Kohlefaserfilz, ein Kohlefasertuch, ein kohlefaserhaltiges Papier oder eine Graphitfolie mit einem Karbonisierungsverhältnis von ≥ 40 % bei Karbonisierung in einer nicht oxidierenden Atmosphäre bei 800 °C ist,
- Verteilen eines Klebemittels auf mindestens einer Oberfläche eines karbonisiert-geformten Körpers, um eine Beschichtungsschicht des Klebemittels zu erhalten,
- Laminieren eines anderen geformten Körpers auf die Beschichtungsschicht, um einen laminierten Körper zu erhalten, und
- Karbonisieren des laminierten Körpers,
**dadurch gekennzeichnet, dass** der Klebstoff ein Klebstoff für einen Wärmedämmstoff nach einem der Ansprüche 1-3 ist.

5. Verfahren nach Anspruch 4, wobei der karbonisiert-geformte Körper, auf dem der Klebstoff verteilt ist, eine dichte innere Struktur aufweist, und wobei die heterocyclische Verbindung des Klebemittels die Matrix des karbonisiert-geformten Körpers aufquellen lässt.

6. Verfahren nach Anspruch 5, wobei der karbonisiert-geformte Körper, auf dem das Klebemittel verteilt wird, eine Graphitplatte ist.

7. Verfahren nach Anspruch 4, wobei der karbonisiert-geformte Körper, auf dem das Klebmittel verteilt wird, eine poröse innere Struktur aufweist.

8. Verfahren nach einem der Ansprüche 4 bis 7, wobei der karbonisiertlaminierte Körper ein Wärmedämmstoff ist.

## Revendications

1. Adhésif pour un isolant thermique, dans lequel l'adhésif comprend :
(1) 100 parties en masse (pem) d'une matière première pour carbonisation avec un rapport de carbonisation ≥ 40 % lorsqu'elle est carbonisée dans une atmosphère non oxydante à 800 °C, la matière première étant choisie parmi un polyuréthane, un polyisocyanate, un polyimide, une résine phénolique, une résine de furane, une résine d'urée, une résine de polyester, une résine époxy, du brai et du goudron de houille, l'adhésif comprend en outre :
(2) 5 à 150 pem d'un composé hétérocyclique qui a de l'oxygène en tant qu'élément de construction de son cycle et qui dissout la matière première pour carbonisation ; et
(3) 5 à 80 pem de n'importe lesquelles parmi des fibres courtes de carbone et des fibres courtes qui sont carbonisables et insolubles dans le composé hétérocyclique dans lequel n'importe lesquelles parmi les fibres courtes de carbone et les fibres courtes qui sont carbonisables et insolubles dans le composé hétérocyclique sont **caractérisées en ce qu'**elles ont une longueur moyenne de fibre de 0,02 à 2 mm et répondent à 200≥L/D≥5.

2. Adhésif pour un isolant thermique selon la revendication 1, dans lequel le composé hétérocyclique est un composé ayant un groupe furyle.

3. Adhésif pour un isolant thermique selon la revendication 2, dans lequel le composé ayant un groupe furyle est 2-furylméthanol et/ou 2-furylaldéhyde.

4. Procédé de production d'un corps stratifié carbonisé comprenant les étapes suivantes :
- calcination d'une fibre de carbone ou d'un matériau de graphite, dont chacun est éventuellement imprégné d'une résine carbonisable, pour obtenir un corps moulé carbonisé, le corps moulé carbonisé étant un feutre en fibres de carbone, une toile en fibres de carbone, un papier contenant des fibres de carbone ou une feuille de graphite et ayant un rapport de carbonisation ≥ 40 % lorsqu'il est carbonisé dans une atmosphère non oxydante à 800 °C,
- étalement d'un adhésif sur au moins une surface d'un corps moulé carbonisé pour obtenir une couche de revêtement de l'adhésif,
- stratification d'un corps moulé différent sur la couche de revêtement pour obtenir un corps stratifié, et
- carbonisation du corps stratifié,
**caractérisé en ce que** l'adhésif est l'adhésif pour un isolant thermique selon l'une quelconque des revendications 1 à 3.

5. Procédé selon la revendication 4, dans lequel le corps moulé carbonisé sur lequel l'adhésif est étalé a une structure interne dense, et dans lequel le composé hétérocyclique de l'adhésif gonfle la matrice du corps moulé carbonisé.

6. Procédé selon la revendication 5, dans lequel le corps moulé carbonisé sur lequel l'adhésif est étalé est une feuille de graphite.

7. Procédé selon la revendication 4, dans lequel le corps moulé carbonisé sur lequel l'adhésif est étalé a une structure interne poreuse.

8. Procédé selon l'une quelconque des revendications 4 à 7, dans lequel le corps stratifié carbonisé est un isolant thermique.
